# EUROPÄISCHE PATENTSCHRIFT

(11) **EP 0 806 059 B1**
(45) Veröffentlichungstag und Bekanntmachung des Hinweises auf die Patenterteilung: **07.01.1999**
(21) Anmeldenummer: 95941642.1
(22) Anmeldetag: 01.12.1995
(51) Int. Cl.: H01M 10/54, C22B 3/38, C22B 3/40

(54) **VERFAHREN ZUR RÜCKGEWINNUNG VON METALLEN AUS GEBRAUCHTEN NICKEL-METALLHYDRID-AKKUMULATOREN**
PROCESS FOR RECOVERY OF METALS FROM USED NICKEL-METAL HYDRIDE ACCUMULATORS
PROCEDE DE RECUPERATION DES METAUX CONTENUS DANS DES ACCUMULATEURS USES EN NICKEL-HYDRURE METALLIQUE

(30) Priorität: 20.12.1994 DE 4445495
(43) Veröffentlichungstag der Anmeldung: 12.11.1997
(73) Patentinhaber: VARTA Batterie Aktiengesellschaft, 30419 Hannover (DE); TREIBACHER AUERMET Produktionsges. m.b.H., 9330 Treibach-Althofen (AT)
(72) Erfinder: KLEINSORGEN, Klaus, D-65779 Kelkheim (DE); KÖHLER, Uwe, D-65779 Kelkheim (DE); BOUVIER, Alexander, A-9021 Krumpendorf (AT); FÖLZER, Andreas, A-9330 Treibach-Althofen (AT)
(74) Vertreter: Kaiser, Dieter Ralf, Dipl.-Ing.
(86) Internationale Anmeldenummer: EP9504736
(87) Internationale Veröffentlichungsnummer: WO9619841

(56) Entgegenhaltungen:
- EP-A- 0 585 701
- EP-A- 0 649 912
- WO-A-92/03853
- DE-A- 4 224 884
- FR-A- 2 131 824
- US-A- 4 041 125
- US-A- 4 162 296
- US-A- 5 129 945
- US-A- 5 429 887
- JOM, Bd. 45, Nr. 5, 1.Mai 1993 Seiten 32-35, XP 000368623 LYMAN J W ET AL 'INVESTIGATING THE RECYCLING OF NICKEL HYDRIDE BATTERY SCRAP'

## Beschreibung

Die Erfindung betrifft ein Verfahren zur Rückgewinnung von Metallen aus gebrauchten Nikkel-Metallhydrid-Akkumulatoren, bei dem das Gut mechanisch zerkleinert und in wenigstens eine Grobfraktion und eine Feinfraktion aufgeteilt wird, die getrennt voneinander aufgearbeitet werden, wobei die Feinfraktion mittels einer starken Säure in Lösung gebracht wird, aus welcher Lösung die Metalle schrittweise durch selektive Fällung und/oder Flüssig-Flüssig-Extraktion abgetrennt und zurückgewonnen werden.

Nickel-Metallhydrid-Akkumulatoren gelten als eine zukunftsträchtige Altemative auf dem Gebiet wiederaufladbarer Zellen und haben sich bereits in den letzten Jahren erhebliche Marktanteile erobert. Hohe volumen- und gewichtsbezogene Energiedaten machen Batterien dieses Typs zu einem Energiespeichersystem, das für alle Anwendungen, sei es als Gerätebatterie oder als Traktionsbatterie für Elektrofahrzeuge interessant ist.

Ein Nachteil dieses Hochleistungssystems ist es allerdings, daß es den Einsatz von teuren und gemessen an den zur Verfügung stehenden Ressourcen knappen Rohstoffen erfordert. Die in den heute gebräuchlichen NiMeH-Akkumulatoren verwendeten wichtigsten Komponenten sind Nickel, Seltene Erden und insbesondere Kobalt, das als strategisch bedeutsamer Rohstoff gilt und daher auch großen Preisschwankungen unterworfen ist. Nickel und Kobalt sind die wesentlichen Elemente in der positiven Elektrode. In der negativen Elektrode sind neben Nickel und Kobalt vor allem Seltene Erden Bestandteile der Wasserstoffspeicherlegierung. Das vorliegende Verfahren betrifft im wesentlichen NiMeH-Akkumulatoren mit dieser Legierungszusammensetzung.

Zusätzlich zu den aktiven Elektrodenmaterialien, die direkt zur Energiespeicherung dienen, enthalten die Akkumulatoren noch die aus Nickel bestehenden Trägermaterialien als wichtigste Materialkomponente.

Angesichts des hohen Materialwertes, den eine Nickel/Hydrid-Zelle daher auch im nicht mehr funktionstüchtigen Zustand darstellt, sowie der erwähnten knappen Ressourcen für diese Materialien, ist deren Wiederverwertung ein dringendes wirtschaftliches Gebot.

Das Recycling von Nickel-Metallhydrid-Akkumulatoren lehnt sich erwartungsgemäß an Wiederaufbereitungsmethoden an, die von der Rückgewinnung des Nickels und Kobalts aus Ni/Cd-Akkumulatoren, z.B. gemäß WO 92/03853, oder von der Aufarbeitung eines Schrottmaterials, das Seltene Erden enthält (gemäß US-PS5129945), bereits bekannt sind.

Ein in der DE-OS 4224884 beschriebenes Verfahren hat die Wiederaufbereitung verbrauchter Batterien und Akkumulatoren aus dem Hausmüll zum Ziel. Da diese unsortiert anfallen und unter den Wertstoffen u.a. auch Quecksilber und Kupfer aus Primärelementen zu berücksichtigen sind, die in alkalischen Akkumulatoren nicht vorkommen, ist dieses Verfahren kompliziert und die apparative Ausstattung entsprechend aufwendig. Die Anfangsschritte zur Erschließung des Schrottmaterials sind jedoch in allen Fällen ähnlich: die gebrauchten Zellen werden zunächst mechanisch zerkleinert und durch Siebung, Windsichtung und Magnetscheidung in verschiedene Fraktionen getrennt. Eine im wesentlichen den Gehäuseschrott umfassende magnetische Fraktion enthält Nickel und Eisen und kann zu Ferronickel verarbeitet werden. In einer Leichffraktion sammeln sich Kunststoffe aus den Gehäusen, Separatoren und Bindemitteln. Eine Feinfraktion schließlich setzt sich aus den zerkleinerten eigentlichen Inhaltsstoffen der Zellen, dem Elektroden- und Elektrolytmaterial zusammen. Diese Fraktion enthält die Masse der rückzugewinnenden Stoffe. Sie werden durch eine naßchemische Aufbereitung, beginnend mit einem Säure-Aufschluß, schrittweise getrennt und zumeist in elementarer Form, als Metall, zurückgewonnen.

Von den Ni/Cd-Akkumulatoren unterscheiden sich die alkalischen Nickel-Metallhydrid-Akkumulatoren im Prinzip nur durch die negative Elektrode, deren aktive Masse aus einer Wasserstoffspeicheriegierung auf einem Träger besteht.

Wasserstoffspeicherlegierungen sind intermetallische Verbindungen, die sich in Anlehnung an die einfache binäre Legierung LaNi₅ einem AB₅-Typ oder in Anlehnung an die Legierung TiNi₂ einem AB₂-Typ zuordnen lassen. Wasserstoffspeicherlegierungen des AB₅-Typs für Nickel-Metallhydrid-Akkumulatoren setzen sich häufig aus 45-55% Ni, 30-35% Seltene Erden (SE), 5-15% Co, 2-5% Mn und 1-4% Al zusammen.

Bei der Wiederaufarbeitung von Nickel-Metallhydrid-Akkumulatoren mit AB₅-Legierungen hat sich ein Säureaufschluß der aus der mechanischen Zerkleinerung hervorgehenden Feinfraktion nach bekannten Methoden als unzulänglich erwiesen, weil sich ein Teil gerade der besonders wertvollen Rohstoffe, nämlich der SE, des Ni und des Co, der Auflösung entzieht. Auch der EP-A-585701, die ein Verfahren zum Entsorgen von Nickel-Cadmium- oder Nickel-Hydrid-Zellen betrifft, ist keine konkrete Lehre für das vollständige Erfassen insbesondere der SE zu entnehmen, da sie auf die Art eines gegebenenfalls vorhandenen Metallhydrids und seine Selektion nicht näher eingeht.

Der Erfindung liegt die Aufgabe zugrunde, die bei der mechanischen Grobaufbereitung verbrauchter Nickel-Metallhydrid-Akkumulatoren anfallende Feinfraktion, welche im wesentlichen die aktiven Elektrodenmassen, deren Trägermaterial und den Elektrolyten umfaßt, so zu behandeln, daß eine restlose Auflösung des feinteiligen Schrotts gewährleistet ist.

Die Aufgabe wird erfindungsgemäß mit dem durch Patentanspruch 1 definierten Verfahren gelöst.

Die Aufarbeitung der Zellen wird demnach eingeleitet durch eine Reihe von Schritten, die Modifikationen an sich bekannter Maßnahmen darstellen.

So hat es sich als zweckmäßig erwiesen, den angelieferten Schrott zunächst nach Zellengrößen zu sortieren, d.h. in kleine Rund- und Knopfzellen sowie große prismatische Zellen aufzuteilen. Beide Zellengruppen werden unter Wasser geöffnet, wobei man bei den großen Zellen relativ einfach durch Aufsägen des Zellgefäßes eine Abtrennung der Gehäuseteile vom Gehäuseinhalt erreicht. Während die Gehäuseteile als Stahlschrott in die Stahlindustrie zurückgehen, werden die Elektrodenpakete unter Wasser zu 3 bis 15 mm großen Stücken zerkleinert, filtriert und laugefrei gewaschen. Das Öffnen der kleinen Zellen geschieht, indem man sie auf Partikel der nämlichen Größe von 3 bis 15 mm zerkleinert, sie ebenfalls laugefrei wäscht und Eisenpartikel mittels Magnetabscheider abtrennt.

Für alle Zerkleinerungsvorgänge eignet sich eine Schredder-Anlage. Die Durchführung der Zerkleinerung unter Wasser empfiehlt sich, weil die feinen Metallpartikel der negativen Elektrode sich entzünden können.

Die weitgehend Fe-freien Partikel der Rund- und Knopfzellen und die Elektrodenpartikel aus den prismatischen Zellen werden nunmehr vereinigt und erfindungsgemäß in einer ca. 20%igen Schwefelsäure mit einem Wasserstoffperoxid-Zusatz von 1Gew.% bis 10Gew.% gelöst. Der H₂O₂-Gehalt der Schwefelsäure sollte vorzugsweise ca. 3Gew.% betragen.

Diese Zusammensetzung des Aufschlußmittels sorgt dafür, daß die metallischen und oxidischen Bestandteile der Elektroden vollständig gelöst werden.

Eine noch ungebrauchte typische Nickel-Metallhydrid-Zelle enthält:
Ni(OH)₂ (pos. Masse), Ni(met) (neg. Speicherlegierung, Träger), CoO (pos. Masse), Co(met) (neg. Speicherlegierung), Zn(OH)₂ (pos. Masse), Selt.Erd (Mischmetall) (neg. Speicherlegierung), Mn (neg. Speicherlegierung), Al (neg. Speicherlegierung), Fe (Träger, Zellgefäß).

Darüber hinaus sind geringe Mengen Kohlenstoff-Additive (neg. Elektrode), PTFE-Binder (neg., pos. Elektrode) und Kunststoff-Faservlies (Separator) vorhanden.

Es ergibt sich eine prozentuale Aufteilung der Metalle wie folgt:
Ni ca. 45%, Co ca. 5 %, SE (Mm) ca. 10 %, Fe ca. 35 % sowie geringere Mengen an Zn, Mn und Al.

Beim Betrieb der Zelle über mehrere hundert Lade/Entladezyklen erfährt das Innere der Zelle jedoch eine chemische Veränderung. Diese betrifft vor allem die in der negativen Elektrode eingesetzte Wasserstoff-Speicherlegierung, deren Komponenten einer schleichenden Oxidation ausgesetzt sind. Zusätzlich erfährt auch die positive Elektrode eine Veränderung, die es bei der Wahl des Recyclingverfahrens zu berücksichtigen gilt. So wird ein Teil des Ni(OH)₂ auf Dauer im oxidierten 3-wertigen Zustand verharren. Dies ist für das erfindungsgemäße Vorgehen insofem von Bedeutung, als sich Nickeloxid dieser Wertigkeitsstufe nur sehr schwer durch Säure aufschließen läßt. Durch die erfindungsgemäße Aufschlußmischung aus Schwefelsäure und Wasserstoffperoxid werden die genannten Schwierigkeiten überwunden und die metallischen und oxidischen Bestandteile der Elektroden vollständig gelöst. Der H₂O₂-Zusatz sorgt speziell dafür, daß auch sonst nicht lösliches 3-wertiges Nickeloxid, 4-wertiges Ceroxid und ebenfalls 4-wertiges Manganoxid, die noch in den Elektroden vorliegen, in der Säure reduzierend gelöst werden. Auch Passivschichten beim Auflösen der Metalle werden so vermieden.

Da auch die Trägermaterialien aus Metall bestehen, bleiben von den Elektroden nur die kohlenstoffhaltigen Komponenten sowie das als Bindemittel verwendete PTFE übrig. Diese setzen sich zusammen mit dem verbliebenen Separatormaterial des Zellstapels bzw. Wikkels an der Oberfläche des Lösungsreaktors ab und können mittels eines Flotationsprozesses leicht abgeschöpft werden.

Eine besonders vorteilhafte Eigenschaft der Aufschlußmischung gemäß der Erfindung besteht darin, daß sie die in manchen Nickel-Metallhydrid-Zellen verwendeten Wasserstoffspeicherlegierungen vom AB₂-Typ nur teilweise löst. Deren mögliche Anteile am Zellenschrott können daher schon bei diesem Schritt weitgehend abgesondert werden.

Im Reaktor liegt nach Abschluß des Lösungsprozesses eine Wertstofflösung mit einer Metallionen-Gesamtkonzentration von etwa 50 bis 80g/l vor. In dieser Lösung befinden sich aus dem zur Verarbeitung gelangten Schrott ohne Reste alle SE, alles Co, Ni, Mn, Zn und Al. Ebenfalls vorhandenes Fe ist als Resteisenmenge aufgrund einer unvollständigen Vorabtrennung der Fe-haltigen Teile in die Wertstofflösung gelangt. Seine Menge ist je nach Qualitätsgrad der Vorabscheidung mit bis zu 3g/l anzusetzen.

Schließlich muß für den Fall des versehentlichen Einsickerns von Ni/Cd-Zellen durch Fehlsortierung auch mit Cd-Konzentrationen zwischen 0,1 bis 4g/l gerechnet werden, ferner mit geringen Verunreinigungen durch Ti, Zr, Cr und V aus AB₂-Legierungen. Durch Beimengung von Alkali-Mangan-Primärzellen wird gegebenenfalls der Anteil an Mn und Zn erhöht.

Nach Abschluß des Lösungsvorganges liegt der pH-Wert der Wertstofflösung zunächst im extrem sauren Bereich (pH<<1).
Aus der stark sauren Lösung werden durch Zugabe von NaOH oder NH₄OH, wobei der pH-Wert auf etwa 1,5 bis 2 ansteigt, die Seltenen Erden als sehr schwer lösliche Doppelsalze vom Typus (SE)₂(SO4)₃ · Na₂SO₄ · xH₂O ausgefällt. SE steht stellvertretend für La, Nd, Dy, Pr, Sm, Ce etc. oder für Mischungen aus denselben.

Der abfiltrierte Niederschlag wird in Säure gelöst, aus dieser Lösung wird eine Seltenerdchlorid oder ein Seltenerdoxid gewonnen, welches in einer elektrometallurgischen Reduktion zum Seltenerdmetall oder zu einer Mischung aus mehreren derselben (Mischmetall) unterworfen wird.

Um sicherzustellen, daß in dem für die Doppelsulfaffällung günstigen pH-Bereich noch kein Eisen mitgefällt wird, hat es sich erfindungsgemäß als sehr wirksam erwiesen, die frische Lösung der Feinfraktion nach dem H₂SO₄/H₂O₂-Aufschluß zuvor im Kreislauf solange über das in der Grobfraktion angefallene Metall zu leiten, bis alles durch das H₂O₂ als Fe³⁺ gelöstes Eisen zu Fe²⁺ reduziert und alles H202 zersetzt ist.

Im Filtrat der Doppelsulfaffällung befinden sich nunmehr alle nicht zur Gruppe der Seltenen Erden zählenden Übergangsmetalle sowie Aluminium und gegebenenfalls geringe Reste an Seltenen Erden, femer an Ti, Zr, Cr und V.

Durch weiteres Anheben des pH-Wertes über 2 hinaus, vorzugsweise auf 4 bis 4,5, werden als nächstes Eisen in Form eines basischen Sulfats (NaFe₃(SO₄)₂(OH)₆, Jarosit) bzw. Hydroxids und gegebenenfalls Aluminium als Al(OH)₃ ausgefällt. Damit alles vorhandene Fe²⁺ in fällfähiger 3-wertiger Form in den Niederschlag geht, wird die Lösung vorher mit einem Oxidationsmittel, vorzugsweise H₂O₂, behandelt.
Ein besonders trennungsscharfer und gut filtrierbarer Fe-, Al-Niederschlag bildet sich dann, wenn für diese oberhalb pH2 vorzunehmende Fällung erfindungsgemäß nicht Alkalilauge, sondem Alkalikarbonat, gegebenenfalls ein Gemisch aus NaOH und Na₂CO₃ verwendet wird. Dieses sollte zumindest 10Gew.% Na₂CO₃ enthalten. Dabei werden der Wertstofflösung selbst kleinste Mengen an Fe quantitativ entzogen, die sonst ins Filtrat mitgeschleppt und im weiteren Verlauf der Aufarbeitung emeut abgetrennt werden müßten.

Vermutlich ist mit dem Einbringen des Alkalikarbonats, bei dem die saure Lösung durch das Entbinden von CO₂ aufschäumt, ein intensiver Rühreffekt verbunden, der dafür sorgt, daß die Fällungsbedingungen in der Lösung überall gleich sind. Fehlt der Rühreffekt, herrscht vorzugsweise nur an den Eintropfstellen der Alkalilauge momentan ein stark alkalisches Milieu, während die Umgebung noch stark sauer ist. In deren Einflußbereich löst sich der Hydroxidniederschlag dann teilweise wieder auf.

Der auf die Fe-, Al-Ausfällung, bei der allenfalls Verunreinigungen von Ti, Zr und V miterfaßt werden, folgende Schritt ist eine Extraktionsstufe, wie sie von Verfahren für die Herstellung von Nickel und Kobalt an sich bekannt ist und die dazu dient, bestimmte Metalle aus der Aufschlußlösung zu selektieren. Als Extraktionsmittel eignen sich vorzugsweise phosphorhaltige Kationenaustauscher in Verbindung mit einem organischen Lösungsmittel.

Für die Herstellung neuer Wasserstoffspeicherlegierungen, aber auch zur Herstellung neuer Nickelhydroxidmassen für die positiven Elektroden von Nickel-Metallhydrid-Zellen ist die quantitative Rückgewinnung des Nickels und Kobalts von besonderem Interesse. Deshalb ist es im Rahmen der Erfindung besonders vorteilhaft, die Lösungsmittelextraktion so zu führen, daß sie eine vollständige Trennung der Wertstoffe Ni und Co einerseits und der übrigen Begleitstoffe andererseits, nämlich Zn, Mn, Cd, Al sowie Seltene Erden, Fe und eventuell Cr, soweit diese nicht durch bereits vorausgegangene Fällungen vollständig entfernt worden sind, bewirkt.
Diese Trennung gelingt, wenn der pH-Wert der Wertstofflösung nach der Fe-, Al-Hydroxidfällung durch Zugabe von Alkali auf Werte von pH 3 bis pH 4, vorzugsweise auf ca. pH 3,5 eingestellt und die Lösung mit einem Flüssigkeitsgemisch aus Di-Ethyl-Hexyl-Phosphorsäure, Isotridecanol und einem aliphatischen Kohlenwasserstoff als Verdünnungsmittel durch Rühren im Mixer in intensiven Kontakt gebracht wird. Die Volumenanteile der drei Flüssigkeiten sollten sich, entsprechend der genannten Reihenfolge, wie 30:10:60 verhalten. Femer sollten die wässerige Phase und Lösungsmittelphase in einem Volumenverhältnis von 1:1 oder größer stehen.

Durch die Lösungsmittelextraktion gehen Zn, Mn, Cd, Al, Fe und Seltene Erden vollständig in die organische Phase über, während Ni und Co quantitativ in der wässerigen Phase zurückbleiben. Damit liegen auch deren Konzentrationen in der Wertstofflösung in dem gleichen Verhältnis vor, mit dem sie am Akkumulatorenschrott beteiligt sind.

Die unter den genannten Bedingungen durchgeführte Lösungsmittelextraktion stellt bezüglich der Metalle Ni und Co eine "Reinigungsextraktion" dar, durch welche der Einfluß von Fehlsortierungen beseitigt wird. Sie lassen sich aus der schwach sauren wässerigen Extraktionsphase nunmehr durch emeute Anwendung eines Solventextraktionsverfahrens voneinander trennen und z.B. durch Zugabe von Natriumhydroxid oder Natriumkarbonat als Hydroxide fällen und aus diesen schließlich durch metallothermische Verfahren in elementarer Form erschmelzen.

Das jeweils in die organische Phase gegangene Metallsalz kann durch sogenanntes Strippen vor der Hydroxidfällung in eine wässerig-saure Phase überführt werden.

Eine besonders günstige Methode der Rückgewinnung von Ni und Co ist die der elektrochemischen Abscheidung, weil dafür bestehende Elektrolyseeinrichtungen genutzt werden können. Dabei kann mit großem Vorteil direkt aus der wässerigen Phase nach der Reinigungsextraktion eine gemeinsame Elektrolyse von Ni und Co vorgenommen werden, denn das abgeschiedene Produkt ist eine Ni/Co-Legierung mit dem gleichen Atomverhältnis wie das Verhältnis der Lösungskonzentrationen der Metalle, wobei deren Verhältnis wiederum der Verteilung des Ni und Co im aufgearbeiteten Akkumulatorenschrott entspricht. Die getrennte Gewinnung von Ni und Co durch Elektrolyse ist wiederum dann angezeigt, wenn sie als Material für die positive Nickelhydroxidelektrode bereitgestellt werden sollen.

Das erfindungsgemäße Recyclingverfahren hat somit die Gewinnung eines Endprodukts zum Ergebnis, welches als Vorlegierung für neue Wasserstoffspeicherlegierungen dem Legierungshersteller unmittelbar zur Verfügung gestellt werden kann.

Die Mischmetall-Komponente der neuen Wasserstoffspeicheriegierung wird aus dem Doppelsulfat-Niederschlag der Seltenen Erden zurückgewonnen, indem dieser in Säure aufgelöst wird. Aus dieser Lösung wird ein Seltenerdchlorid oder Seltenerdoxid gewonnen, welches einer elektrometallurgischen Reduktion zum Seltenerdmetall oder zu einer Mischung aus mehreren derselben (Mischmetall) unterworfen wird.
Die im Lichtbogenofen erschmolzene Ni/Co-Vorlegierung kann nunmehr gemeinsam mit dem aus der Doppelsulfaffällung aufgearbeiteten Mischmetall in einem Vakuuminduktionstiegelofen oder in einem Vakuumlichtbogenofen zur Wasserstoffspeicheriegierung umgeschmolzen werden.

Da auch die positiven Elektroden von Nickel-Metallhydrid-Akkumulatoren Ni und Co in einem ähnlichen Atomverhältnis wie die Wasserstoffspeicheriegierung der negativen Elektrode enthalten, kann die durch Simultanelektrolyse gewonnene Ni/Co-Legierung nach optionaler Auftrennung auch zur Herstellung neuer positiver Nickelhydroxidmassen vom Batteriehersteller direkt übemommen werden.

Wegen der Gleichheit der in Nickel-Metallhydrid-Zellen und in Ni/Cd-Zellen verwendeten positiven Elektroden wird das anteilige Verhältnis von Nickel und Kobalt in verbrauchten Nickel-Metallhydrid-Zellen durch Einschleppen von Ni/Cd-Zellen in den Akkumulatorenschrott praktisch nur unwesentlich verändert. Das anmeldungsgemäße Recycling-Verfahren ist dadurch gegenüber Fehlsortierungen weitgehend unempfindlich.

## Patentansprüche

1. Verfahren zur Rückgewinnung von Metallen aus gebrauchten Nickelhydrid-Akkumulatoren, bei dem das Gut mechanisch zerkleinert und in wenigstens eine Grobfraktion und eine Feinfraktion aufgeteilt wird, die getrennt voneinander aufgearbeitet werden, wobei die Feinfraktion mittels einer starken Säure in Lösung gebracht wird, aus welcher Lösung die Metalle schrittweise durch selektive Fällung und/oder Flüssig-Flüssig-Extraktion abgetrennt und zurückgewonnen werden, dadurch gekennzeichnet, daß zum Lösen der Feinfraktion Schwefelsäure mit einem Zusatz von Wasserstoffperoxid eingesetzt wird.

2. Verfahren nach Anspruch 1, dadurch gekennzeichnet, daß die H₂O₂-Konzentration der Schwefelsäure 1Gew.% bis 10Gew.% beträgt.

3. Verfahren nach Anspruch 2, dadurch gekennzeichnet, daß die H₂O₂-Konzentration der Schwefelsäure ca. 3Gew.% ist.

4. Verfahren nach einem der Ansprüche 1 bis 3, dadurch gekennzeichnet, daß ca. 20%ige Schwefelsäure verwendet wird.

5. Verfahren nach einem der Ansprüche 1 bis 4, dadurch gekennzeichnet, daß die frische Lösung der Feinfraktion solange im Kreislauf über die metallische Grobfraktion geführt wird, bis alles Wasserstoffperoxid zersetzt und als Fe³⁺ gelöstes Eisen zu Fe²⁺ reduziert ist.

6. Verfahren nach einem der Ansprüche 1 bis 5, dadurch gekennzeichnet, daß aus dem Filtrat des Schwefelsäure-Aufschlusses durch schrittweises Anheben des pH-Wertes mittels Alkali-Zusatz nacheinander Seltene Erden, die aus den die negativen Metallhydridelektroden bildenden Wasserstoffspeicherlegierungen stammen, als Doppelsulfate sowie Eisen und Aluminium als basische Sulfate bzw. Hydroxide ausgefällt werden.

7. Verfahren nach Anspruch 6, dadurch gekennzeichnet, daß zur Anhebung des pH-Wertes für die Fe-/Al-Hydroxidfällung im Filtrat nach der Doppelsulfaffällung als Alkali-Zusatz Alkalikarbonat oder ein NaOH/Na₂CO₃-Gemisch mit mindestens 10Gew.% Na₂CO₃ verwendet wird.

8. Verfahren nach einem der Ansprüche 1 bis 7, dadurch gekennzeichnet, daß zum Ausbringen von Zn, Mn, Cd sowie von Resten an Fe, Al und Seltenen Erden das Filtrat nach der Fe-/Al-Hydroxidfällung einer Lösungsmittel-Extraktion unterzogen wird, wobei das Extraktionsmittel und der pH-Wert so gewählt werden, daß nach der Extraktion die Metalle Ni und Co vollständig in der wässerigen Phase gelöst und in dem gleichen Atomverhältnis verbleiben, wie sie im Akkumulatorenschrott vorgelegen haben.

9. Verfahren nach Anspruch 8, dadurch gekennzeichnet, daß die Extraktionsflüssigkeit aus einem Gemisch aus Di-Ethyl-Hexyl-Phosphorsäure (DEHPA) mit Isotridecanol und einem aliphatischen Kohlenwasserstoff im Verhältnis 30:10:60 gebildet ist.

10. Verfahren nach den Ansprüchen 8 und 9, dadurch gekennzeichnet, daß die Lösungsmittelextraktion bei einem pH-Wert in der Ausgangslösung zwischen pH 3 und pH 4, vorzugsweise bei pH 3,5 durchgeführt wird.

## Claims

1. Process for the recovery of metals from used nickel/hydride storage batteries, in which the material is mechanically comminuted and is divided up into at least a coarse and a fine fraction which are treated separately from one another, the fine fraction being dissolved by means of a strong acid, from which solution the metals are separated stepwise by selective precipitation and/or liquid/liquid extraction and recovered, characterized in that sulphuric acid with an addition of hydrogen peroxide is used to dissolve the fine fraction.

2. Process according to Claim 1, characterized in that the H₂O₂ concentration of the sulphuric acid is 1% by weight to 10% by weight.

3. Process according to Claim 2, characterized in that the H₂O₂ concentration of the sulphuric acid is approximately 3% by weight.

4. Process according to one of Claims 1 to 3, characterized in that approximately 20%-strength sulphuric acid is used.

5. Process according to one of Claims 1 to 4, characterized in that the fresh solution of the fine fraction is circulated over the metallic coarse fraction until all the hydrogen peroxide is decomposed and iron dissolved as Fe³⁺ is reduced to Fe²⁺.

6. Process according to one of Claims 1 to 5, characterized in that, as a result of increasing the pH stepwise by means of alkali addition, rare earths which originate from the hydrogen storage alloys which form the negative metal hydride electrodes are consecutively precipitated from the filtrate of the sulphuric acid digest as double sulphates, and iron and aluminium are precipitated as basic sulphates or hydroxides.

7. Process according to Claim 6, characterized in that to raise the pH for the Fe/Al hydroxide precipitation in the filtrate after the double sulphate precipitation, alkali carbonate or an NaOH/Na₂CO₃ mixture containing at least 10% by weight of Na₂CO₃ is used as alkali addition.

8. Process according to one of Claims 1 to 7, characterized in that, to yield Zn, Mn, Cd and also residues of Fe, Al and rare earths, the filtrate is subjected to a solvent extraction after the Fe/Al hydroxide precipitation, the extractant and the pH being chosen so that, after the extraction, the metals Ni and Co have completely dissolved in the aqueous phase and have remained in the same atomic ratio in which they were present in the storage battery scrap.

9. Process according to Claim 8, characterized in that the extraction liquid is formed from a mixture of diethylhexylphosphoric acid (DEHPA) with isotridecanol and an aliphatic hydrocarbon in the ratio 30:10:60.

10. Process according to Claims 8 and 9, characterized in that the solvent extraction is performed at a pH in the starting solution of between pH 3 and pH 4, preferably at pH 3.5.

## Revendications

1. Procédé de récupération de métaux à partir d'accumulateurs usagés nickel-hydrure de métal où on broie mécaniquement le produit et on fractionne en au moins une fraction grossière et une faction fine, qu'on traite séparément, où on fait passer la fraction fine en solution à l'aide d'un acide fort, d'où on sépare par étape les métaux par précipitation sélective et/ou extraction liquide-liquide et on récupère les métaux,
caractérisé ce que
pour dissoudre la fraction fine on utilise de l'acide sulfurique en utilisant du peroxyde d'hydrogène.

2. Procédé selon la revendication 1,
caractérisé en ce que
la concentration en H₂O₂ de l'acide sulfurique est 1 % en poids à 10 % en poids.

3. Procédé selon la revendication 2,
caractérisé en ce que
la concentration en H₂O₂ de l'acide sulfurique est environ 3 % en poids.

4. Procédé selon l'une des revendications 1 à 3,
caractérisé en ce qu'
on utilise de l'acide sulfurique à environ 20 %.

5. Procédé selon l'une des revendications 1 à 4,
caractérisé en ce qu'
on recycle la solution fraîche de la fraction fine dans le circuit sur la fraction grossière jusqu'à ce que tout le peroxyde d'hydrogène soit décomposé et que le fer dissout sous forme de Fe³⁺ soit réduit en Fe²⁺.

6. Procédé selon l'une des revendications 1 à 5,
caractérisé en ce qu'
à partir du filtrat de la dissolution dans l'acide sulfurique, par augmentation par étape du pH au moyen de l'addition d'alcali on précipite successivement les terres rares, qui proviennent des alliages d'emmagasinage d'hydrogène formant les électrodes d'hydrure de métal, sous forme de sulfates doubles ainsi que le fer et l'aluminium sous forme de sulfates basiques ou d'hydroxydes.

7. Procédé selon la revendication 6,
caractérisé en ce que
pour augmenter le pH pour précipiter l'hydroxyde de Fe/Al dans le filtrat après la précipitation de sulfate double, on utilise comme addition d'alcalin du carbonate d'alcalin ou un mélange NaOH/Na₂CO₃ avec au moins 10 % en poids de Na₂CO₃.

8. Procédé selon l'une des revendications 1 à 7,
caractérisé en ce que
pour éliminer Zn, Mn, Cd ainsi que des restes de Fe, Al et des terres rares on soumet le filtrat après la précipitation d'hydroxyde de Fe/Al à une extraction par solvant, où on choisit le moyen d'extraction et le pH de telle sorte qu'après l'extraction, les métaux Ni et Co sont totalement dissous dans la phase aqueuse et restent dans le même rapport atomique que celui où ils se trouvaient dans les accumulateurs usagés.

9. Procédé selon la revendication 8,
caractérisé en ce que
le liquide d'extraction est composé d'un mélange d'acide phosphorique de diéthyle et d'hexyle (DEHPA), d'isotridécanol et d'un hydrocarbure aliphatique dans le rapport 30 : 10 : 60.

10. Procédé selon les revendications 8 et 9,
caractérisé en ce qu'
on réalise l'extraction par solvant à un pH de la solution de départ compris entre pH 3 et pH 4, de préférence à pH 3,5.
